Europäisches Patentamt

European Patent Office

Office européen des brevets

(19)

(11) Publication number : **0 126 825 B2**

# (12) NEW EUROPEAN PATENT SPECIFICATION

(45) Date of publication of the new patent specification : **02.01.92 Bulletin 92/01**

(51) Int. Cl.⁵ : **B60J 3/02**

(21) Application number : **83307571.6**

(22) Date of filing : **13.12.83**

## (54) Visor assembly.

(30) Priority : **29.04.83 US 489940**

(43) Date of publication of application :
**05.12.84 Bulletin 84/49**

(45) Publication of the grant of the patent :
**24.06.87 Bulletin 87/26**

(45) Mention of the opposition decision :
**02.01.92 Bulletin 92/01**

(84) Designated Contracting States :
**DE FR GB IT**

(56) References cited :
**DE-A- 1 014 446**
**DE-U- 1 681 507**
**DE-U- 1 697 774**
**DE-U- 1 709 160**

(56) References cited :
**DE-U- 1 730 484**
**DE-U- 8 104 417**
**FR-E- 73 125**
**US-A- 1 602 003**
**US-A- 1 684 418**
**US-A- 3 454 301**
**US-A- 4 149 749**

(73) Proprietor : **PRINCE CORPORATION**
**Windcrest Drive**
**Holland Michigan 49423 (US)**

(72) Inventor : **Fleming, Dennis Joseph**
**617 State Street**
**Holland Michigan 49423 (US)**

(74) Representative : **Robinson, Anthony John Metcalf et al**
**Kilburn & Strode 30 John Street**
**London, WC1N 2DD (GB)**

EP 0 126 825 B2

## Description

The present invention relates to a visor assembly suitable for a vehicle and in particular is adapted for use with side windows.

Conventional visors currently used in vehicles, such as automobiles, typically pivot about a generally vertical axis for movement from the windshield position to a side window position for use in blocking sunlight entering the vehicle from a side. Such movement of the visor during operation of the automobile by the driver, necessitated by a change in vehicle direction with respect to incoming sunlight, can be somewhat hazardous inasmuch as frequently it is necessary to duck under the visor as it is pivoted from the forward windshield position to the side window position. Additionally, with sliding visors of the type described in US-A-2,289,644 which slide down from the headliner of a vehicle, such visors cannot be employed for shielding sunlight from the side window area. With sliding visors of the type described in US-A-2,559,471, the operation of the visor which is guided within an edge track can be extremely troublesome since frequently they will stick and be difficult to operate since they do not slide smoothly between a raised stored and a lowered use position.

A visor assembly which has the features set out in the preamble to Claim 1 is known from US-A-1684418.

The visor assembly according to the present invention provides a pivoting visor assembly particularly adapted for use, for example, for a side window of a vehicle.

According to the present invention a visor assembly for a vehicle is characterised by those features set out in the characterising portion of Claim 1.

Conveniently the control means urges the panel toward a stored position. Preferably, the latch means releasably hold the panel in the lowered use position. The latch means can be operator actuated or automatically actuated. If automatically actuated when the vehicle door opens allowing the bias means to return the shield to the stored position this allows easy exit from the vehicle. Preferably, the bias means urges the panel towards the stored position. Alternatively, the latch means may releasably hold the panel in the stored position and the bias means may urge the panel toward the lowered use position.

Preferably the bias means comprises a spring having one end coupled to the support plate and means coupling an opposite end of the spring to a pivot plate secured to one of the arms.

In a preferred embodiment the latch means comprises a latch arm and pin mounted to adjacent members of the assembly which move relative to one another with the arm having a slot for cooperating with the latch pin and means for moving the latch arm between pin receiving and pin disengaging positions.

The latch pin preferably extends from the pivot plate. Preferably the means for moving the latch arm comprises an electrically actuated solenoid.

A cover panel may be positioned to cover the support member and visor panel and include a slot permitting the visor to extend therefrom. Further a handle may be provided extending outwardly from the visor panel and a recess formed in the cover panel to nestably receive the handle when the visor panel is in a stored position, the handle facilitating the movement of the visor from the stored position.

A module may be snap-fitted to the vehicle roof and, provided with one or more pivoted visor assemblies according to the present invention recesses behind a decorative panel to cover one or more side windows.

The invention may be put into practice in various ways but one visor assembly embodying the invention will now be described by way of example, with reference to the accompanying drawings, in which:

Figure 1 is a fragmentary perspective view of visor assembly installed in a vehicle;

Figure 2 is an enlarged, exploded view of the visor assembly shown in Figure 1;

Figure 3 is a fragmentary side elevational view of the assembly shown in Figure 2 showing the visor mechanism in an extended position; and

Figure 4 is a fragmentary side elevational view of the assembly shown in Figures 1 and 2 showing the visor mechanism in a retracted position.

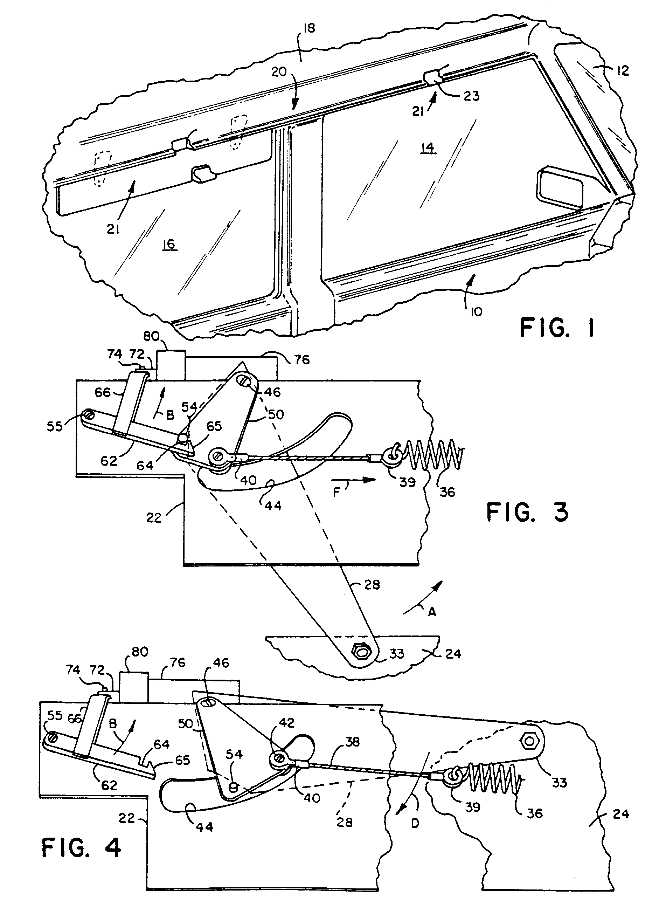

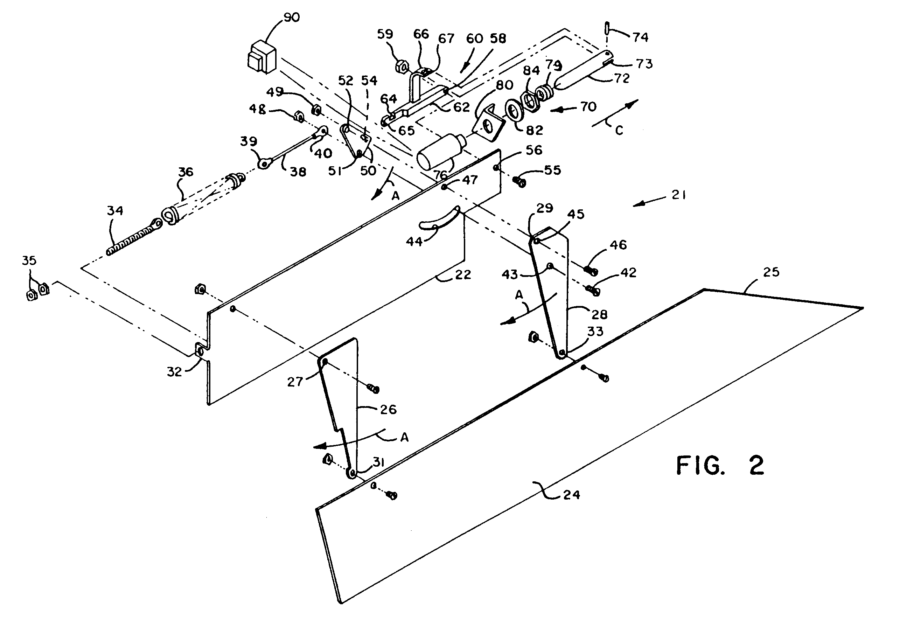

Referring initially to Figure 1, there is shown the left front interior of a vehicle 10 which includes a windshield 12, a left front side window 14 and a side window 16. Extending above the window is the ceiling or headliner area 18 of the vehicle which typically is upholstered with a fabric conforming to the vehicle's general interior decor. The headliner frequently will include a snap-in upholstered panel conventionally secured to the sheet metal roof of the vehicle by means of a known mounting structure adapted to receive snap fasteners, screws or the like. Extending along the lower edge of the headliner just above the windows 14 and 16 is an integral visor assembly module 20 incorporating a pair of pivoted visor assemblies 21 with the forward assembly shown in greater detail in Figures 2 to 4. In Figure 1, the forward visor assembly is shown in its retracted position concealed within the module 20 and therefore, within the headliner of the vehicle and the rear seat visor assembly is shown in the lowered use position. The construction and operation of each of the similar forward and rear visor assemblies contained in module 20 is now described in connection with Figures 2 to 4.

Figure 2 illustrates the visor assembly employed in the front side area of the module 20. A fixed support member 22 is provided and has a generally rectangular planar shape, and can be curved to conform to the headliner area above the side window as necessary for a given vehicle. Pivotally coupled to the fixed support member 22 is a sun shield or visor panel 24 which can be opaque, translucent or transparent of a tinted material typically a polymeric material such as an acrylic and having a thickness of about 3.17 mm (0.125 inches). The visor panel 24 is trapezoidal in shape having a tapered leading edge 25 corresponding to the angle of the leading edge of the window 14 near the top as seen in Figure 1 to cover this triangular area of the window.

The visor panel 24 is pivotally coupled to the support member 22 by means of a pair of spaced parallel and generally triangular arms 26 and 28 each having one end 27 and 29, respectively, pivotally mounted to the support member 22 and an opposite end 31 and 33, respectively, pivotally coupled to the visor panel 24, as shown. The arms 26 and 28 are made of a stiff sheet material such as sheet metal. The members 22, 24, 26 and 28 form a parallelogram providing substantially uniform translating motion of the visor panel 24 with respect to the member 22 between the lowered position illustrated in Figure 3 in which the arms 26 and 28 are generally vertical and a stored position in which the legs pivot in a counterclockwise direction to a substantially horizontal position, illustrated in Figure 4, to elevate the visor to a stored position.

The visor includes an automatic retracting mechanism, the components of which are best illustrated in the exploded view of Figure 2. This visor control is employed for biasing the visor panel 24 in a raised stored position, allowing it to be manually withdrawn into a lowered, releasably latched position, as illustrated by the rear visor panel shown in Figure 1. The panel is automatically raised to the stored position upon actuation of a release by the passenger or vehicle operator. This visor control mechanism includes the support member 22 having anchor means such as an integral tab 32 which receives an adjustment eyebolt 34 for anchoring one end of the bias means such as a tension spring 36 having one end inserted in the eyebolt which, in turn, is secured to tab 32 by means of a pair of lock nuts 35. The opposite end of the spring 36 is coupled to a cable 38 having eyelets 39 and 40 at opposite ends with eyelet 39 being coupled to the spring 36 and the opposite eyelet 40 being coupled to the visor control arm 28 and pivotable latch member or plate 50 by means of a bolt or rivet 42 extending through an aperture 43 in the arm 28, an arcuate slot 44 in the support member 22, an aperture 51 in the plate 50 and through the eyelet 40. The bolt 42 is held in place by a lock nut 48. The aperture 43 in the arm 28 is spaced from the pivot point of the arm 28 to provide a torque to the arm 28, as explained below. The arm 28 is pivotally mounted to the support 22 by an aperture 45 through which there extends a bolt 46 which also extends through an aperture 47 in the support member 22 and through a pivot aperture 52 in the latch plate 50 and is secured by means of a lock nut 49. Thus, the arm 28 and the latch plate 50 pivot together about the pivot bolt or axle 46 with the spring 36 urging the arm 28 and the latch plate 50 in a direction indicated by arrow A in the Figures which is the stored or retracted position of the visor. The arcuate slot 44 in the support member 22 circumscribes an arc of approximately 45° to permit sufficient movement of the bolt 42 through the slot to accommodate the full range of movement of the visor panel 24.

In order to latch the visor in a lowered position, the latch plate 50 includes a latch pin 54 at a remaining corner of the triangular plate remote from the apertures 51 and 52 for cooperating with a pivoted catch assembly 60 including a latching arm 62 and means for selectively actuating the latching arm 62 comprising a solenoid assembly 70. The arm 62 is pivotally coupled to the support member 22 by means of a pivot bolt 55 extending through an aperture 56 in the support member and through an aperture 58 in one end of the arm 62 and secured thereto by a locking nut 59. The opposite end of the arm 62 includes a generally rectangular slot 64 for receiving the pin 54, as illustrated in Figure 3, and a tapered leading edge 65 permitting the pin 54 to ride over the end of the arm 62 and snap-fit into the slot 64 when the visor is manually moved to a lowered position.

The arm 62 is held in a pin latching position pivoted in a direction indicated by arrow B in Figure 3 by means of a spring actuated solenoid coupled to the arm 62 by means of a coupling arm 66 integrally secured at one end of the arm 62 and having a generally L-shaped configuration with a slot 67 adapted to extend into a plunger 72 of the solenoid assembly 70, having a body 76. The plunger 72 includes a slot 73 at one end with a roll pin 74 securing the arm 66 to the plunger. The plunger is biased in a generally outwardly direction indicated by arrow C in Figure 2 by a compression spring 79 within the body 76 of the solenoid assembly. The body 76 includes the electrically actuated solenoid coil and is secured to the support member 22 by means of a bracket 80, a lock washer 82 and a lock nut 84, assembled in a known manner with the bracket 80 being spot welded or otherwise secured to the top inside edge of the support member 22, as illustrated in Figures 3 and 4. An electrical push-button switch 90 couples the solenoid coil to the vehicle's electrical supply system with the switch 90 being conveniently located for operator use such as in an overhead console centrally located in the headliner of the vehicle, or in the headliner above the window with which the switch and solenoid assembly is associated. The door activated courtesy light switch, which is standard on vehicles, can also be coupled to the solenoid coil such that in the event the visor is in a lowered latched down position, and the driver or passenger opens the door to get out of the vehicle, the courtesy light switch will actuate the solenoid body 76 to retract the visor.

The operation of the automatic retracting visor assembly can best be seen with reference to Figures 3 and 4, beginning with the visor in a raised, stored position, as illustrated in Figure 4. In this position, the spring 36 has sufficient tension to maintain the cable 38 taut and the visor in a secured stored position against the spring tension. When it is desired to use the visor, a tab 23 formed on the visor panel and extending through a notch 85 of the visor assembly module 20 or headliner panel 18 (Figure 1) can be used for manually pulling the visor downwardly, pivoting the arms 28 and 26 in a direction indicated by arrow D, in Figure 4, which is opposite to arrow A. As this occurs, the latch plate 50 also pivots about the pivot bolt or pin 46 and the arm 62 which is in an upwardly biased direction, as indicated by arrow B in Figures 3 and 4, is in a position such that the latch pin 54 will, when the visor is fully lowered, contacts the tapered leading edge 65 which acts as a ramp and subsequently snaps into the rectangular slot 64 thereby holding the visor in a lowered use position against the spring tension force indicated by arrow F in Figure 3. In this position, with the solenoid deactivated, the spring 79 holds the arms 62 in this upwardly biased position. When the door opens or the passenger actuatos the switch 90 to momentarily actuate the solenoid 70, its actuation forces the plunger 72 outwardly from the body of the solenoid, pivoting the arm 62 in a direction opposite to arrow B such that the pin 54 disengages from the slot 64 allowing the spring 36 to pull the arm 28 upwardly in a direction indicated by arrow A, which pivots the visor panel 24 upwardly until it is fully retracted, as shown in Figure 4.

Various modifications differing from the embodiment described are encompassed within the scope of the present invention. Thus, for example, it may be desired to provide two lowered and releasably latched positions in which case a second pivot plate 50, pivoted catch assembly or latching arm assembly 60, and release assembly such as a solenoid assembly 70 can be provided in association with the arm 26 and aligned such that the visor will latch at a partial downward position and be releasably retracted to a stored position from the mid-way position or fully extended by the operator to the fully lowered position and retracted from either position. The bias means can be coupled to either arm or to the visor panel itself. Also, the particular form of latching and release mechanism can be varied by, for example, substituting a manual cable release in place of the electrical solenoid system if desired.

## Claims

1. A visor assembly (21) for a vehicle (10) comprising: a visor panel (24); at least a pair of substantially parallel arms (26,28) spaced from one another and each having an end (31,33) pivotally secured to the visor panel at spaced locations thereon; means for pivotally securing the opposite end (27,29) of each arm to one side of a support plate (22) to permit movement of the visor panel on the arms, in a plane generally orthogonal to the pivot axes of the arms and parallel with the arms, between a raised stored position and a lowered use position; **characterised by** control means partly located on the other side of the support plate (22) and including a pivot plate (50) mounted on the pivot axis of one of the parallel arms (28) on the said other side of the support plate (22), coupling means (42) extending from the said one side to the said other side of the support plate (22) for securing the pivot plate (50) to the said one arm (28), bias means (36) coupled to the pivot plate (50) and urging the panel (24) to one of the stored or use positions, and latch means (60) operatively associated with the pivot plate (50) for releasably holding the panel (24) in the other of the stored or use positions.

2. An assembly as claimed in Claim 1 in which the latch means (60) releasably holds the panel (24) in the lowered use position.

3. An assembly as claimed in Claim 1 or 2 in which the bias means (36) urges the panel (24) toward the stored position.

4. An assembly as claimed in any one of the preceding claims in which the bias means comprises a spring (36) having one end coupled to the support plate (22) and means coupling an opposite end of the spring to the pivot plate (50).

5. An assembly as claimed in any one of the preceding claims in which the latch means (60) comprises a latch arm (62) and a pin (54) mounted to adjacent members of the assembly which move relative to one another with the latch arm (62) having a slot (64) for cooperating with the latch pin and means for moving the latch arm between pin-receiving and pin-disengaging positions.

6. An assembly as claimed in Claim 5 in which the means for moving the latch arm (62) comprises an electrically actuated solenoid (70).

7. An assembly as claimed in any one of the preceding claims including a cover panel (20) positioned to cover the support plate (22) and visor panel (24) and including a slot permitting the visor to extend therefrom.

8. An assembly as claimed in Claim 7 including a handle (23) extending outwardly from the visor panel (24) and a recess (85) formed in the cover panel to nestably receive the handle (23) when the visor panel (24) is in a stored position, the handle (23) facilitating the movement of the visor from the stored position.

9. An assembly as claimed in any one of Claims 1 to 8 in which the support plate has an arcuate slot (44) through which the coupling means (42) passes.

## Patentansprüche

1. Sonnenblendeneinheit (21) für ein Fahrzeug (10) umfassend eine Blendenplatte (24); wenigstens ein Paar im wesentlichen paralleler Arme (26, 28), die mit Abstand zueinander angeordnet und mit jeweils einem Ende (31, 33) drehbar an voneinander beabstandeten Stellen an der Blendenplatte gelagert sind; Vorrichtungen zur schwenkbaren Befestigung des gegenüberliegenden Endes (27, 29) jedes Armes an eine Seite einer Stützplatte (22), um eine Bewegung der Blendenplatte an den Armen in einer Ebene, die im wesentlichen senkrecht zu den Drehachsen der Arme und parallel zu den Armen ist, zwischen einer angehobenen Ruhestellung und einer gesenkten Gebrauchsstellung zu ermöglichen; **gekennzeichnet durch** Steuervorrichtungen, die teilweise an der anderen Seite der Stützplatte (22) angebracht sind und eine Drehplatte (50) aufweisen, die auf der Drehachse eines der parallelen Arme (28) auf der anderen Seite der Stützplatte (22) angebracht ist, eine Verbindungsvorrichtung (42), die sich von der einen Seite zu der anderen Seite der Stützplatte (22) erstreckt, um die Drehplatte (50) an dem einen Arm (28) zu lagern, eine Vorspannvorrichtung (36), die mit der Drehplatte (50) verbunden ist und die Blendenplatte (24) in eine der Ruhe- bzw. Gebrauchsstellungen zwingt, und eine Arretiervorrichtung (60), die zusammenwirkend mit der Drehplatte (50) verbunden ist, um die Blendenplatte (24) in der jeweils anderen der Ruhe- oder Gebrauchsstellungen zu halten.

2. Einheit nach Anspruch 1, in welcher die Arretiervorrichtung (60) die Blendenplatte (24) lösbar in der abgesenkten Gebrauchsstellung hält.

3. Einheit nach Anspruch 1 oder 2, in der die Vorspanneinrichtung (36) die Blendenplatte (24) zur Ruhestellung hin zwingt.

4. Einheit nach einem der vorhergehenden Ansprüche, in der die Vorspannvorrichtung eine Feder (36) aufweist, deren eines Ende mit der Stützplatte (22) verbunden ist und eine Vorrichtung, um das gegenüberliegende Ende der Feder an der Drehplatte (50) zu befestigen.

5. Einheit nach einem der vorhergehenden Ansprüche, bei der die Arretiervorrichtung (60) einen Arretierungsarm (62) und einen Stift (54) aufweist, der an angrenzende Teile der Vorrichtung angebracht ist, die sich relativ zueinander bewegen, wobei der Arretierungsarm (62) einen Schlitz (64) zum Zusammenwirken mit dem Arretierungsstift umfaßt und eine Vorrichtung zur Bewegung des Arretierungsarms zwischen einer Stiftaufnahme- und einer Stiftfreigabestellung.

6. Einheit nach Anspruch 5, in der die Vorrichtung zur Bewegung des Arretierungsarms (62) einen elektrischen Schaltmagneten (70) aufweist.

7. Einheit nach einem der vorhergehenden Ansprüche umfassend eine Abdeckplatte (20), die so angeordnet ist, daß sie die Stützplatte (22) und die Blendenplatte (24) abdeckt, und einen Schlitz, von dem sich die Blende erstrecken kann.

8. Einheit nach Anspruch 7, umfassend ein Griffstück (23), das sich von der Blendenplatte (24) nach außen erstreckt, und eine Aussparung (85), die in der Abdeckplatte ausgebildet ist zur bündigen Aufnahme des Griffstücks (23), wenn die Blendenplatte (24) sich in einer Ruhestellung befindet, wobei das Griffstück (23) die Bewegung der Blende von der Ruhestellung erleichtert.

9. Einheit nach einem der Ansprüch 1 bis 8, in der die Stützplatte einen bogenförmigen Schlitz (44) aufweist, durch den die Verbindungsvorrichtung (42) verläuft.

## Revendications

1. Un ensemble pare-soleil (21) pour un véhicule (10) comprenant : un panneau pare-soleil (24), au moins deux bras sensiblement parallèles (26, 28), espacés l'un de l'autre et comportant chacun une extrémité (31, 33) fixée de façon pivotante sur le panneau pare-soleil en des endroits espacés, des moyens pour fixer de façon pivotante l'extrémité opposée (27, 29) de chaque bras sur un premier côté d'une plaque de support (22) afin de permettre un mouvement du panneau pare-soleil sur les bras, dans un plan dans l'ensemble orthogonal aux axes de pivotement des bras et parallèle aux bras, entre une position haute de rangement et une position basse d'utilisation, caractérisé par un dispositif de commande situé partiellement du deuxième côté de la plaque de support (22) et comprenant une plaque pivotante (50) montée sur l'axe de pivotement de l'un des bras parallèles (28) audit deuxième côté de la plaque de support (22), des moyens d'accouplement (42) s'étendant audit premier côté audit deuxième côté de la plaque de support (22) pour fixer la plaque pivotante (50) audit bras (28), un moyen de sollicitation (36) accouplé à la plaque pivotante (50) et sollicitant le panneau (24) vers une des positions de rangement ou d'utilisation ; et un moyen de verrouillage (60) fonctionnellement associé à la plaque pivotante (50) pour maintenir de façon libérable le panneau (24) dans l'autre desdites positions de rangement ou d'utilisation.

2. Un ensemble tel que revendiqué dans la revendication 1, dans lequel le moyen de verrouillage (60) maintient de façon libérable le panneau (24) dans la position basse d'utilisation.

3. Un ensemble tel que revendiqué dans la revendication 1 ou 2, dans lequel le moyen de sollicitation (36) sollicite le panneau (24) en direction de la position de rangement.

4. Un ensemble tel que revendiqué dans l'une quelconque des revendications précédentes, dans lequel le moyen de sollicitation comprend un ressort (36) comportant une extrémité accouplée à l'élément de support (22) et un moyen accouplant une extrémité opposée du ressort à la plaque pivotante (50).

5. Un ensemble tel que revendiqué dans l'une quelconque des revendications précédentes, dans lequel le moyen de verrouillage comprend un bras de verrouillage (62) et une broche (54) montés sur des éléments adjacents de l'ensemble, qui se déplacent l'un par rapport à l'autre, le bras de verrouillage (62) comportant une fente (64) coopérant avec la broche de verrouillage et un moyen pour déplacer le bras de verrouillage entre des positions de réception et de libération de broche.

6. Un ensemble tel que revendiqué dans la revendication 5, dans lequel le moyen de déplacement du bras de verrouillage (62) comprend un solénoïde (70) excité électriquement.

7. Un ensemble tel que revendiqué dans l'une quelconque des revendications précédentes, comprenant un panneau de recouvrement (20) positionné de manière à recouvrir la plaque de support (22) et le panneau pare-soleil (24) et comportant une fente permettant le passage du pare-soleil.

8. Un ensemble tel que revendiqué dans la revendication 7, comprenant une poignée (23) s'étendant vers l'extérieur à partir du panneau pare-soleil (24) et un évidement (85) ménagé dans le panneau de recouvrement (20) de façon à recevoir par emboîtement la poignée (23) quand le panneau pare-soleil se trouve dans une position de rangement, la poignée (23) facilitant le mouvement du panneau pare-soleil (24) à partir de la position de rangement.

9. Un ensemble tel que revendiqué dans l'une quelconque des revendications 1 à 8, dans lequel la plaque de support possède une fente incurvée (44) que traverse le moyen d'accouplement (42).

FIG. 1

FIG. 3

FIG. 4

FIG. 2